# EUROPEAN PATENT APPLICATION

(11) **EP 2 481 915 A1**
(43) Date of publication of application: **01.08.2012**
(21) Application number: 11000594.9
(22) Date of filing: 26.01.2011
(51) Int. Cl.: F03D 7/02, F03D 7/04

(54) **A method and system for connecting a wind turbine system to an electric grid**

(71) Applicant: CHAPDRIVE AS, 7030 Trondheim (NO)
(72) Inventor: Chapple, Peter, Bradford-on-Avon (GB); Niss, Michael, Odegaard, Kuch, 9510 Arden (DK)
(74) Representative: Fluge, Per Roald

(57) **Abstract**

A system and method for connecting a wind turbine system (1) to an electric grid (100), comprising a rotor (2) an electric generator (20) and a closed loop hydraulic transmission system (10). The electric generator (20) is directly connected to the electric grid (100) via a main breaker (50). A control unit (30) is arranged for continuously adjusting the pitch angle (β) and simultaneously adjusting the displacement (d) to control a generator output frequency (ft) before sending a control signal (33) to the main breaker (50) to connect the wind turbine power production system (1) to the grid (100). If a low voltage condition the electric grid (100) is detected the displacement (d) and the flow rate (Q) through flow control valve (39) are controlled to maintain the generator (20) connected to the grid during the low voltage condition

## Description

### Technical field

The present invention relates to the field of wind turbines used for producing electrical energy, and more particularly to wind turbines where a hydrostatic transmission system is used to transfer energy between the turbine rotor and a synchronous generator feeding an electric grid with electric power. The present invention is related to the connection and disconnection of the synchronous generator to and from the electric grid.

### Background art

The electrical power grid infrastructure has traditionally grown based on large central-station generating units providing electricity through transmission lines and distribution grids from the generating units to the consumers. However, more focus on renewable energy sources, deregulation, new power electronics technology etc. paves the way for more distributed energy production where a two-way flow of power will be required for a larger penetration of embedded energy sources, such as wind turbine power plants, often located far from the traditional centralised power plants.

Wind turbines connected to the electric grid has evolved gradually over time. The first wind turbines connected to electric grids were directly driven and the rotational speed of the turbine could vary only about 1 - 2 %, leading to inefficient power production for most wind speeds. Further development within power electronics has led to more flexible systems with partial and full scale frequency converters between the generator and the electric grid. Systems with partial scale frequency converters where a portion of the power output passes through the converter are the most widely developed wind power production systems today. The partial or full decoupling of the electrical and rotor rotational speeds by the converter absorbs changes in wind speed. Mechanical gearboxes are usually needed to speed up the rotational speed of the wind turbine rotor to a generator rotational speed.

With increasing generated power and turbine size the location and weight of the drive train and the generator is becoming increasingly important for the installation and maintenance of the wind turbine power production systems. Analysis show that about 30 % of the downtime for a conventional wind turbine is related to the mechanical gearbox. The weight of a 5MW generator and the associated mechanical gearbox is typically 50 000 to 200 000 kg, and when the centre of the wind turbine rotor extends 100 to 150 m above the ground or sea level, the deployment and maintenance of conventional systems with mechanical gears and generator in the nacelle may become both costly and difficult.

Wind turbine systems with a variable gear based on a hydrostatic transmission system between the wind turbine rotor and the electric generator is known from background art. The use of a hydrostatic transmission system allows for more flexible location of the hydraulic motor and electric generator in the wind turbine power production system than with conventional technology where the location of the components is restricted by the placement of the drive train and the gear box.

International patent application WO2007/053036 A1 discloses a wind turbine power production system with a hydraulic pump and a variable displacement hydraulic motor interconnected in a closed hydraulic loop. The wind turbine rotor drives the hydraulic pump and the hydraulic pump drives a generator. Further a control circuit is shown controlling the displacement of the hydraulic motor and thus the gear ratio from the turbine to the electric generator.

For fixed speed wind turbines according to prior art, soft starters are used to reduce the in-rush current by building up the magnetic field of the generator gradually. Soft starters may be implemented by power electronics such as thyristors.

Where the system comprises converters, the converters are used for smoothing out the grid connection. Thus the turbine will generate alternating current at the variable frequency applied to the stator. However, when the wind turbine power production system is starting up, or for some other reason the main breaker has been switched off, and needs to be switched on again, the wind turbine power production system must be synchronized with the electric grid before re-connecting the two systems by switching on the main breaker. The connection of a wind turbine power production system to an electric grid requires that the voltage, frequency and phase angle of both systems to be matched exactly before the generator is connected to the grid. During the synchronization stage the wind turbine is driven by the wind, but disconnected from the grid. Synchronization of wind turbines with converters can be performed by controlling the pitch angle of the turbine. The rotor speed will be increased until it reaches a speed required for synchronization. In this situation the generator is running without load, and the current of the stator of the generator can be controlled to adjust the output voltage according to the voltage of the grid to reduce the phase difference.

The requirements for synchronization may differ from region to region, and are usually related to the rated output power of the electric generator. As an example the allowed frequency difference for a 500 kW generator is 0,3 Hz, while it is only 0,1 Hz for a 10 MW generator in Norway.

### Short summary

The present invention discloses a wind turbine power production system with a closed loop hydrostatic transmission system and a synchronous generator directly connected to the grid via a main breaker. The wind turbine power production system is arranged for synchronising the generator with the electric grid before connecting the generator to the electric grid without the use of electric converters, complying with the strict requirements for synchronization of larger wind turbines. In order to get within the frequency range specified it is necessary to be able to control the generator speed very accurately when no converter is used. In addition the invention is a system and method for keeping the generator to the electric grid during low voltage conditions to comply with Low Voltage Ride Through requirements without the use of electrical converters.

The wind turbine power production system comprises a turbine rotor having a variable pitch angle, a synchronous electric generator and a closed loop hydraulic transmission system comprising a hydraulic pump, and a hydraulic motor with a variable displacement, the hydraulic transmission system arranged for the transfer of mechanical energy from the turbine rotor to the synchronous electric generator, the electric generator comprising electric output terminals directly connected to first contacts of a main breaker where second contacts of the main breaker are directly connected to an electric grid.

The wind turbine power production system further comprises a grid control unit arranged for sending a pitch control signal to the turbine rotor to adjust the pitch angle and arranged for sending a displacement control signal to the hydraulic motor to adjust the displacement.

The grid control unit is further arranged for;
- continuously calculating and sending the pitch control signal and the displacement control signal to maintain a generator output frequency within a predefined allowable grid frequency range when the main breaker is switched off,
- comparing a difference in phase angle between a generator phase angle and a grid phase angle with a predefined allowable phase angle range, and
- sending a control signal to the main breaker to connect the wind turbine power production system to the grid when the difference in phase angle is within the predefined allowable phase angle range for a predefined time.

According to an embodiment the invention is also a method for connecting the wind turbine power production system to an electric grid, where the method comprises the following steps;
- continuously adjusting the pitch angle and simultaneously adjusting the displacement to maintain a generator output voltage within a predefined allowable grid voltage range and to maintain a generator output frequency within a predefined allowable grid frequency range when the main breaker is switched off,
- comparing a difference in phase angle between a generator phase angle and a grid phase angle with a predefined allowable phase angle range, and
- switching on the main breaker to connect the wind turbine power production system to the grid when the difference in phase angle is within the predefined allowable phase angle range for a predefined time.

In an embodiment the control unit is arranged for sending an excitation control signal to an exciter of the electric generator to maintain a generator output voltage within a predefined allowable grid voltage range.

The present invention has a number of advantages. One of these is that a wind turbine system according to the invention can be synchronised with the electric grid before connecting the generator to the electric grid without the use of electric converters. In conventional wind turbine power production systems electric converters are needed to synchronise the output of the generator with the electric grid to ensure that the voltage frequency and phase is within the requirements set by the grid operator before connecting the system to the grid. According to the present invention the fast displacement control of a hydraulic system in combination with a relatively slower pitch control unit allows synchronization with the grid with a reduced number of system components, and thus lower installation and maintenance costs of the wind turbine power production system.

Further, converters introduce an efficiency loss in the system, in particular when they operate outside a rated operational range.

A further advantage of the invention is that various different national and regional requirements for Low Voltage Ride Through (LVRT) requirements can be met after the connection to the grid. Due to the inventive hydraulic circuit design and control, the turbine and generator may be instantly disconnected from each other during a low voltage condition, where the generator runs synchronously with the electric grid, and the turbine continues to run with a constant rotational speed. This solution is mainly independent of the actual voltage drop or the duration of the voltage drop of the electric grid. When voltage in the electric grid returns to normal the turbine and generator are hydraulically re-connected to resume power production. Thus, according to the invention no specific arrangement or implementation has to be made for compliance with specific grid codes.

### Brief description of the figures in the drawings

The invention is illustrated in the attached drawing figures meant to illustrate preferred and alternate embodiments of the invention. The drawings shall not be construed to limit the scope of the invention which shall solely be limited by the attached claims.

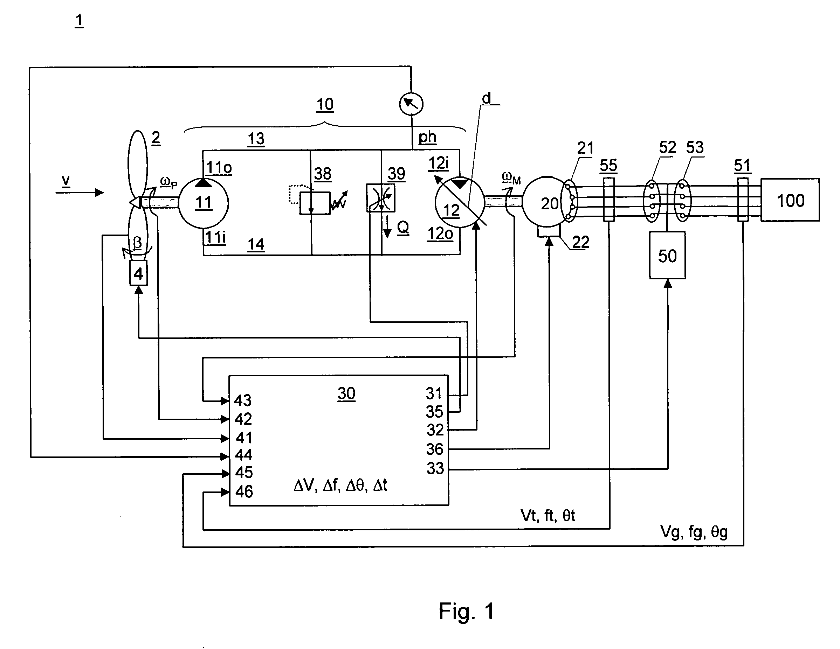

Fig. 1 shows in a schematic drawing a system according to an embodiment of the invention. Additional components of wind turbine power production systems, such as oil filters, booster pump, oil reservoir, valves, control unit etc. can be found in prior art, e.g.
international patent application WO2007/053036 A1.

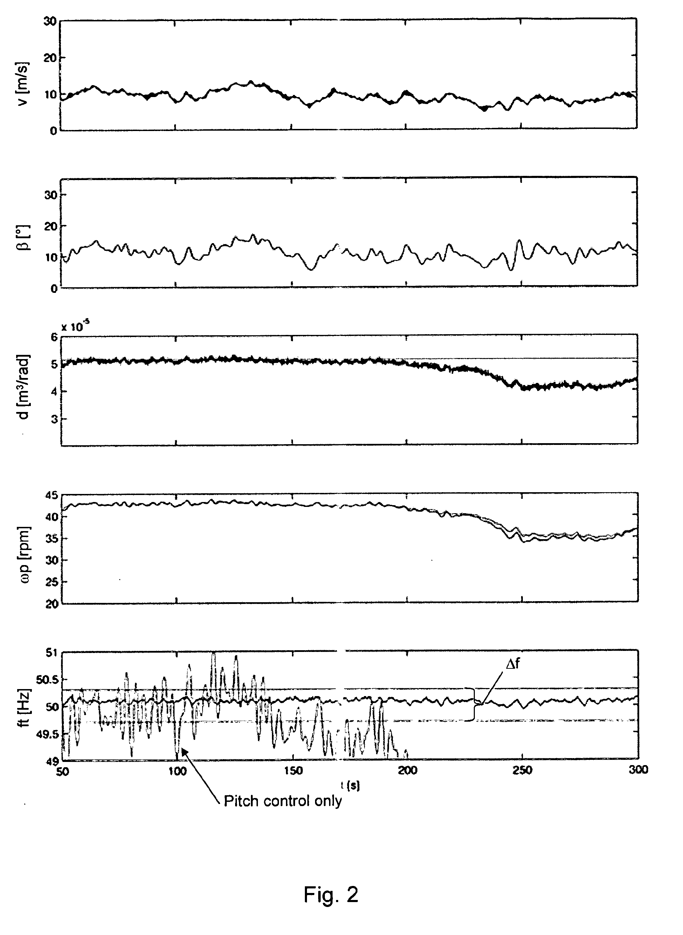

Fig. 2 shows simulations at mean wind speed of 10 m/s for a specific embodiment of the invention according to the invention. In the lower figure representing the output frequency, also the frequency of a similar system where the displacement is kept constant is shown. In this case pitch control only is used to control the output frequency.

### Embodiments of the invention

Embodiments of the present invention will now be described in greater detail with reference to the accompanying drawings. It should be noted that the embodiments given below are exemplary only, and they are not limiting for the invention.

The present invention relates to wind turbines where the electric generator is driven by a hydrostatic transmission system and the electric generator is connected to an electric grid via a main breaker, and where the wind turbine power production system is arranged for synchronising the generator with the electric grid before connecting the generator to the electric grid by switching on the main breaker without the use of electric converters.

In Fig. 1 a wind turbine power production system (1) according to an embodiment of the invention is shown. The wind turbine power production system (1) comprises, a turbine rotor (2) having a variable pitch angle (β), a synchronous electric generator (20) and a closed loop hydraulic transmission system (10) comprising a hydraulic pump (11), and a hydraulic motor (12) with a variable displacement (d), the hydraulic transmission system (10) arranged for the transfer of mechanical energy from the turbine rotor (2) to the synchronous electric generator (20), the electric generator (20) comprising electric output terminals (21) directly connected to first contacts (52) of a main breaker (50) where second contacts (53) of the main breaker (50) are connected to an electric grid (100). The main breaker is of a standard type used in wind turbines as will be understood by a person skilled in the art.

In an embodiment the control unit is arranged for continuously calculating and sending the pitch control signal (35) and the displacement control signal (d) to maintain a generator output frequency (ft) within a predefined allowable grid frequency range (Δf) when the main breaker (50) is switched off. Further, comparing a difference in phase angle between a generator phase angle (θt) and a grid phase angle (θt) with a predefined allowable phase angle range (Δ6), and sending a control signal (33) to the main breaker (50) to connect the wind turbine power production system (1) to the grid (100) when the difference in phase angle is within the predefined allowable phase angle range (Δθ) for a predefined time (At).

Given that the phase angle should also be within the specified limits at the same time as the frequency, it is necessary to control the generator speed so that it stays within the frequency range for some amount of time until the phase angle difference gets low enough to connect the generator to the grid.

In an embodiment the control unit (30) is arranged for sending an excitation control signal (36) to an exciter (22) of the electric generator (20) to maintain a generator output voltage (Vt) within a predefined allowable grid voltage range (ΔV). In an embodiment the generator output voltage (Vt) is fixed in the exciter, and the control system (30) will not have to change the set voltage.

The hydraulic transmission system (10) is arranged for the transfer of all mechanical energy from the turbine rotor (2) to the synchronous electric generator (20), i.e. no additional or parallel energy transfer means are used between the turbine rotor and the generator. The hydraulic transmission system (10) is in this embodiment of the invention a closed loop, i.e. an output (11o) of the hydraulic pump (11) is connected to an input (12i) of the hydraulic motor (12) by a high pressure line (13) and an input (11i) of the hydraulic pump (11) is connected to an output (12o) of the hydraulic motor (12) by a low pressure line (14). The hydraulic motor (12) is driving the synchronous electric generator (20) with a generator rotational speed (ωₘ). The generator rotational speed (ωₘ) is thus the same as the rotational speed of the hydraulic motor (12). The turbine rotor (2) driven by the wind with a wind speed (v) rotates with a turbine rotational speed (ωₚ). The hydraulic pressure in the low pressure line (14) may be kept at a constant value by a boost system of the hydraulic transmission system (10) as will be understood by a person skilled in the art.

In an embodiment the invention is also a method for connecting the wind turbine power production system (1) to an electric grid (100) comprising the following steps;
- continuously controlling the pitch angle (β) and simultaneously controlling the displacement (d) to control a generator output frequency (ft),
- sending a breaker control signal (33) to switch on the main breaker (50) to connect the wind turbine power production system (1) to the grid (100).

In an embodiment the method comprises continuously controlling the pitch angle (β) and simultaneously controlling the displacement (d) to maintain to maintain a generator output frequency (ft) within a predefined allowable grid frequency range (Δf) when the main breaker (50) is switched off. Before connecting the generator to the grid the method will also control the phase angle of the grid and the generator by;
- comparing a difference in phase angle between a generator phase angle (θt) and a grid phase angle (θt) with a predefined allowable phase angle range (Δθ), and
- switching on the main breaker (50) to connect the wind turbine power production system (1) to the grid when the difference in phase angle is within the predefined allowable phase angle range (Δθ) for a predefined time (At).

In an embodiment the control unit (30) is optimized for synchronization at low wind speeds as most synchronizations will be performed under these conditions. During testing and when the turbine has been stopped due to very high winds and the wind then drops again, it is also necessary to be able to connect at higher wind speeds. But as synchronization in general is taking place at low wind speeds it is accepted that it might take a little longer to connect at the high wind speeds due to poorer performance.

Fig. 2 shows simulations at mean wind speed of 10 m/s for a specific embodiment of the invention according to the invention. The wind speed (v), turbine pitch angle (β), displacement (d), turbine rotational speed (ωₚ) and generator output frequency (ft) are shown over a time period of 250 seconds.

In the lower graph representing the generator output frequency (ft) it is seen that the generator output frequency (ft) may be synchronised with the grid frequency for the purpose of connecting the generator (20) to the electric grid (100), and remain within the predefined allowable grid frequency range (Δf) when the wind turbine system is synchronised according to the invention. For comparison the frequency of a similar system where the displacement is kept constant is shown. In this case pitch control only is used to control the output frequency. However, in this configuration it is more difficult to synchronize the system due to the relative slow response of the pitch control unit, and for the majority of cases such a system would not be able to comply with the connection requirements from the grid operator. Note that the generator output frequency (ft) drops at the end because it is not able to operate with variable turbine rotational speed (ωₚ) due to the fixed gear ratio when the displacement is kept constant.

According to an embodiment of the invention the wind turbine power production system (1) further comprises a flow control valve (39) arranged between the high pressure line (13) and the low pressure line (14). The flow control valve (39) is arranged for receiving a flow control signal (31) from the control unit (30) and controlling a flow of hydraulic fluid from the high pressure line (13) to the low pressure line (14) as a function of the flow control signal (31).

The wind turbine power production system (1) further comprises a voltage sensor (51) arranged for sensing a voltage (U) of an electric grid (100) connected to the generator (20) and sending the voltage signal (34) to the control unit (30).

The control unit (30) is arranged for reducing the displacement (d) of the variable displacement hydraulic motor (12) and controlling a flow rate (Q) through the flow control valve (39) when a low voltage condition of the voltage (U) of the electric grid (100) is detected to maintain the generator rotational speed (ωₘ) and the turbine rotational speed (ωₚ) during the low voltage condition.

According to an embodiment of the invention the flow control valve (39) is in normal operation closed by the flow control signal (31) from the control unit (30). The level of the motor displacement (d) may be set by the control unit (30) when the a low voltage condition is not detected depending on the operational mode of the wind turbine power production system (1). According to an embodiment of the invention the motor displacement (d) is part of a closed loop system for the control of turbine rotational speed (ωₚ) at a preset value.

When the low voltage condition is sensed it is required to maintain the generator rotational speed (ωₘ) such that the generator (20) remains connected to the grid (100). For this situation to be maintained the flow control valve (39) will be connected to the high pressure line (13) of the loop of the hydrostatic transmission system (10) and will provide a constant flow rate (Q) from the high pressure line (13) to the low pressure line (14) of the loop. The high output pressure from the pump (11) will be at the level necessary to provide sufficient pump torque to resist the torque from the turbine rotor (2). The flow control valve (39) is of the pressure compensated type so that the restriction of the valve is automatically varied in order to maintain the flow at a preset value regardless of the pressure level.

By maintaining the flow in this way the turbine speed is kept constant, the power from which is absorbed by the restrictive process in the valve. This will cause heating of the oil for the length of time that the low voltage condition persists such heat being dissipated into the oil cooling system in the normal way (of all the grid codes the maximum time for the low voltage condition is 10s).

In order to keep the generator (20) operating at synchronous speed, i.e. the speed required to be in synchronization with the electric grid (100), the displacement (d) is reduced to zero by the control unit (30), thus not requiring any significant levels of torque from the generator (20) whilst the generator (20) operates as an electric motor at synchronous speed. Reducing the displacement (d) to zero also stops oil from the hydraulic pump (11) from passing through the hydraulic motor (12).

When the voltage (U) of the electric grid (100) returns to its nominal value the control unit (30) sends a flow control signal (31) to the flow control valve (39) to reduce the flow rate (Q), and further sends a displacement control signal (32) to the hydraulic motor (32) to increase the displacement (d) of the variable displacement hydraulic motor (12). The flow rate (Q) will be reduced to zero, and the displacement (d) will be controlled according to the control algorithm for the wind turbine power production in normal power production mode.

According to an embodiment of the invention the displacement is reduced to below 10% of maximum displacement when the low voltage condition of the voltage (U) of the electric grid is detected.

According to an embodiment of the invention the displacement is reduced to below zero when the low voltage condition of the voltage (U) of the electric grid is detected.

According to an embodiment of the invention the control unit (30) is arranged for controlling the flow rate (30) through the flow control valve (39) the value of which is set by the control unit (30) during the low voltage condition.

## Claims

1. A wind turbine power production system (1) comprising, a turbine rotor (2) having a variable pitch angle (β), a synchronous electric generator (20) and a closed loop hydraulic transmission system (10) comprising a hydraulic pump (11), and a hydraulic motor (12) with a variable displacement (d), said hydraulic transmission system (10) arranged for the transfer of mechanical energy from said turbine rotor (2) to said synchronous electric generator (20), said electric generator (20) comprising electric output terminals (21) directly connected to first contacts (52) of a main breaker (50) where second contacts (53) of said main breaker (50) are connected to an electric grid (100), said wind turbine power production system (1) further comprising a control unit (30) arranged for sending a pitch control signal (35) to a turbine pitch actuator (4) to adjust said pitch angle (β), and arranged for sending a displacement control signal (32) to said hydraulic motor (12) to adjust said displacement (d), said control unit (30) further arranged for;
- continuously calculating and sending said pitch control signal (35) and said displacement control signal (d) to control a generator output frequency (ft),
- sending a control signal (33) to said main breaker (50) to connect said wind turbine power production system (1) to said grid (100).

2. A wind turbine power production system (1) according to claim 1, wherein said control unit (30) is arranged for;
- continuously calculating and sending said pitch control signal (35) and said displacement control signal (d) to maintain a generator output frequency (ft) within a predefined allowable grid frequency range (Δf) when said main breaker (50) is switched off,
- comparing a difference in phase angle between a generator phase angle (θt) and a grid phase angle (θt) with a predefined allowable phase angle range (Δθ), and
- sending a control signal (33) to said main breaker (50) to connect said wind turbine power production system (1) to said grid (100) when said difference in phase angle is within said predefined allowable phase angle range (Δθ) for a predefined time (Δt).

3. A wind turbine power production system (1) according to claim 2, wherein said control unit (30) is arranged for;
- sending an excitation control signal (36) to an exciter (22) of said electric generator (20) to maintain a generator output voltage (Vt) within a predefined allowable grid voltage range (ΔV).

4. A wind turbine power production system (1) according to any of the claims 1 to 3, comprising a flow control valve (39) arranged between said high pressure line (13) and said low pressure line (14) arranged for receiving a flow control signal (31) from said control unit (30) and controlling a flow of hydraulic fluid from said high pressure line (13) to said low pressure line (14) as a function of said flow control signal (31), and
- a voltage sensor (51) arranged for sensing a voltage (U) of an electric grid (100) connected to said generator (20) and sending said voltage signal (34) to said control unit (30),
- said control unit (30) arranged for reducing said displacement (d) of said variable displacement hydraulic motor (12) and controlling a flow rate (Q) through said flow control valve (39) when a low voltage condition of said voltage (U) of said electric grid (100) is detected to maintain said generator rotational speed (ωₘ) and said turbine rotational speed (ωₚ) to maintain said generator (20) connected to said grid during said low voltage condition.

5. A method for connecting a wind turbine power production system (1) to an electric grid (100), where said wind turbine power production system (1) comprises, a turbine rotor (2) having a variable pitch angle (β), a synchronous electric generator (20) and a closed loop hydraulic transmission system (10) comprising a hydraulic pump (11), and a hydraulic motor (12) with a variable displacement (d), said hydraulic transmission system (10) arranged for the transfer of mechanical energy from said turbine rotor (2) to said synchronous electric generator (20), said electric generator (20) comprising electric output terminals (21) directly connected to first contacts of a main breaker (50) where second contacts of said main breaker (50) are connected to said electric grid (100), said method comprising the following steps;
- continuously controlling said pitch angle (β) and simultaneously controlling said displacement (d) to control a generator output frequency (ft),
- sending a breaker control signal (33) to switch on said main breaker (50) to connect said wind turbine power production system (1) to said grid (100).

6. A method for connecting a wind turbine power production system (1) to an electric grid (100) according to claim 5, comprising the following steps;
- continuously controlling said pitch angle (β) and simultaneously controlling said displacement (d) to maintain a generator output frequency (ft) within a predefined allowable grid frequency range (Δf) when said main breaker (50) is switched off,
- comparing a difference in phase angle between a generator phase angle (θt) and a grid phase angle (θt) with a predefined allowable phase angle range (Δθ), and
- switching on said main breaker (50) to connect said wind turbine power production system (1) to said grid when said difference in phase angle is within said predefined allowable phase angle range (Δθ) for a predefined time (At).

7. A method for connecting a wind turbine power production system (1) to an electric grid (100) according to claim 6, comprising the following steps;
- sending an excitation control signal (36) to an exciter (22) of said electric generator (20) to maintain a generator output voltage (Vt) within a predefined allowable grid voltage range (Δθ).

8. A method for connecting a wind turbine power production system (1) to an electric grid (100) according to any of the claims 5 to 7, wherein said wind turbine power production system (1) comprises a flow control valve (39) arranged between said high pressure line (13) and said low pressure line (14) arranged for receiving a flow control signal (31) from said control unit (30) and controlling a flow of hydraulic fluid from said high pressure line (13) to said low pressure line (14) as a function of said flow control signal (31), and
- a voltage sensor (51) arranged for sensing a voltage (U) of an electric grid (100) connected to said generator (20) and sending said voltage signal (34) to said control unit (30), comprising the following steps;
- continuously sensing said voltage (U), and
- if a low voltage condition of said voltage (U) of said electric grid (100) is detected
- reducing said displacement (d) of said variable displacement hydraulic motor (12) and controlling a flow rate (Q) through said flow control valve (39),
to maintain said generator rotational speed (ωₘ) and said turbine rotational speed (ωₚ) during said low voltage condition to maintain said generator (20) connected to said grid during said low voltage condition.
